# EUROPÄISCHE PATENTSCHRIFT

(11) **EP 3 031 991 B1**
(45) Veröffentlichungstag und Bekanntmachung des Hinweises auf die Patenterteilung: **24.06.2020**
(21) Anmeldenummer: 15198689.0
(22) Anmeldetag: 09.12.2015
(51) Int. Cl.: E03F 7/12, E03F 9/00, F16L 55/18, F16L 101/00, F16L 55/44

(54) **ABSTÜTZVORRICHTUNG**
BRACING DEVICE
DISPOSITIF D'APPUI

(30) Priorität: 11.12.2014 DE 202014105991 U
(43) Veröffentlichungstag der Anmeldung: 15.06.2016
(73) Patentinhaber: iPEK International GmbH, 87477 Sulzberg (DE)
(72) Erfinder: Kennerknecht, Gerhard, 87561 Oberstdorf (DE); Zahnd, Fabian, 87437 Kempten (DE); Henn, Peter, 87452 Krugzell (DE)
(74) Vertreter: 2s-ip Schramm Schneider Bertagnoll Patent- und Rechtsanwälte Part mbB

(56) Entgegenhaltungen:
- EP-A1- 1 450 095
- DE-A1-102007 004 485
- DE-A1-102012 004 218
- DE-A1-102012 008 202
- DE-U1- 9 419 853
- DE-U1-202010 012 386
- DE-U1-202011 004 376
- US-A- 2 278 026
- US-B1- 7 505 063

## Beschreibung

### Gebiet der Erfindung

Die Erfindung betrifft ein Abstützmodul, insbesondere für ein Inspektionssystems und/oder Reinigungssystems zum Abstützen des Inspektions- und/oder Reinigungssystems an einer Wand oder zum Verspannen des Inspektions- und/oder Reinigungssystems in einem Rohr, sowie ein Inspektions- und/oder Reinigungssystem, insbesondere Kanalinspektions- und/oder Reinigungssystem mit einem erfindungsgemäßen Abstützmodul.

### Hintergrund der Erfindung und Stand der Technik

Zur Durchführung von Rohr- bzw. Kanalinspektionen oder Kanalreinigungs- bzw. Wartungsarbeiten ist es bekannt, sogenannte Kanalinspektions- und/oder Wartungssysteme (Systeme) zu verwenden, die in das zu inspizierende bzw. wartende Rohr bzw. Kanalrohr eingebracht werden können und im Kanalrohr bewegt, etwa verfahren oder vorgeschoben werden können.

Bei der Inspektion oder Wartung von Rohren bzw. Kanälen kann es vorteilhaft sein, das System in dem Rohr abzustützen oder zu verspannen, um eine präzise Inspektion oder Wartung durchführen zu können. Ferner kann durch das Abstützen oder Verspannen das System ortsfest stabilisiert werden, sodass etwa Fräs- oder Bohrarbeiten einfacher ausgeführt werden können ohne dass das System verrutscht. Darüber hinaus können während der Wartungsarbeiten auftretende Erschütterungen des Systems reduziert werden.

Um dies zu erreichen, können an dem System Abstützvorrichtungen vorgesehen sein, mit denen das System an einer Rohrinnenwandung abgestützt oder in dem Rohrinneren verspannt werden kann.

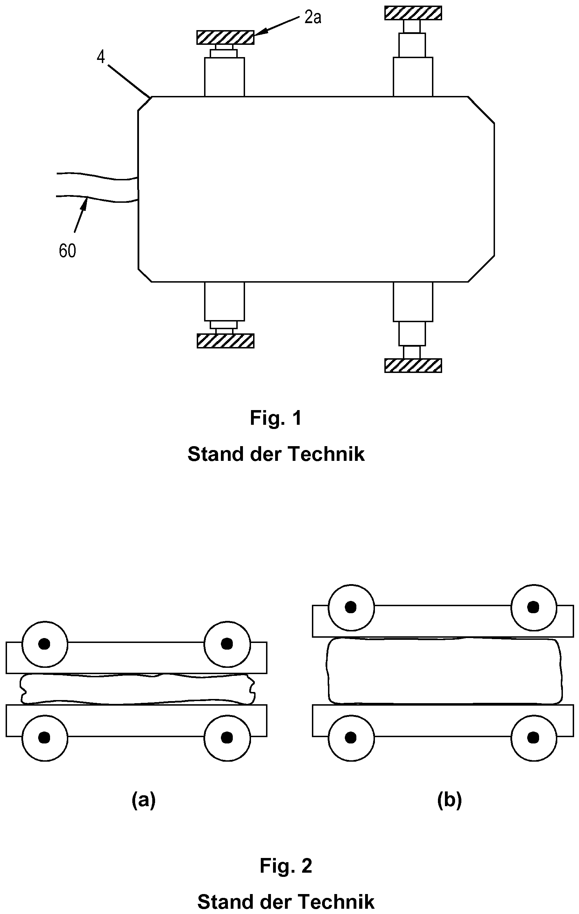

**Fig. 1** zeigt ein Kanalinspektionssystem, bei dem mehrere Abstützvorrichtungen vorgesehen sind, wobei jede Abstützvorrichtung pneumatisch/hydraulisch/elektrisch betätigbare Teleskoparme aufweist, an denen jeweils ein Anpressmittel 2a angeordnet ist. Um das System abzustützen bzw. im Rohrinneren zu verspannen können die Teleskoparme ausgefahren werden, um die Anpressmittel gegen die Innenwandung zu drücken. Eine solche Ausgestaltung hat allerdings den Nachteil, dass die Abstützvorrichtungen insgesamt ein hohes Gewicht aufweisen, sodass für den Vortrieb des Kanalinspektionssystems entsprechend starke Antriebsmotoren vorgesehen werden müssen. Bei Schiebesystemen, die über keinen eigenen Antrieb verfügen und etwa mittels eines halbflexiblen Schiebekabels 60 vorgeschoben werden, kann dieses Gewicht den Vorschub erschweren oder gar verhindern. Zudem müssen pneumatisch/hydraulisch betriebene Teleskoparme regelmäßig gewartet werden, was sich negativ auf die Betriebs- und Unterhaltskosten auswirken kann. Ein weiterer Nachteil liegt darin, dass ausgefahrene Teleskoparme bei Unterbrechung einer Stromversorgung nicht selbstständig in die Ausgangsposition zurückkehren können, sodass ein im Rohr verspanntes System bei einer Unterbrechung der Stromversorgung nicht mehr aus dem Rohr gezogen werden kann ohne die Abstützvorrichtungen zu beschädigen. Es können zwar Vorkehrungen getroffen werden, die im Falle einer Unterbrechung der Stromversorgung die Abstützvorrichtungen einfahren. Dies bedeutet allerdings zusätzliches Gewicht und zusätzliche Bauteile, die einem Verschleiß unterliegen und ebenfalls regelmäßig gewartet werden müssen.
**Fig. 2** zeigt ein Kanalwartungssystem das einen oberen und einen unteren Fahrwagen aufweist. Zwischen den beiden Fahrwägen ist ein Luftpolster angeordnet, der mit Druckluft beaufschlagt werden kann, um den oberen Fahrwagen anzuheben, bis die Räder des oberen Fahrwagens gegen die Rohrinnenwandung gedrückt werden.

Diese Lösung hat allerdings den Nachteil, dass das Luftpolster selbst im zusammengefalteten Zustand, wie in Abbildung (a) der Fig. 2 gezeigt, relativ zum gesamten System viel Platz einnimmt, was den Einsatz solcher Systeme in Rohren mit kleinem Durchmesser nahezu unmöglich macht. Zudem kann das Luftpolster, insbesondere in der rauen Umgebung von Abwasserkanälen, leicht beschädigt werden. Ferner müssen auch hier zusätzliche Vorkehrungen getroffen werden, um im Falle einer Unterbrechung der Stromversorgung die Luft aus dem Luftpolster ablassen zu können.

Aus der DE 94 19 853 U1 ist eine höhenverstellbare Lafette als Träger eines Kanalbearbeitungsgerätes bekannt. Die Lafette weist ein Lafettenfahrgestell auf, das angetriebene Räder aufweist. Die Lafette weist eine mittels eines Verstellantriebs in iher Höhe verstellbare Tragekonstruktion auf, an der das Kanalbearbeitungsgerät befestigt ist. Die Tragekonstruktion wird durch mindestens zwei Scherenhubgetrieben gebildet, wobei der Verstellantrieb eine Gewindespindel ist. Damit soll es möglich sein das Kanalbearbeitungsgerät in dem Kanal zu verspannen.

Aus der EP 1 450 095 A1 ist ein Gerät für Rohrinnenaufgaben bekannt. Das Gerät besitzt einen über die gesamte Länge und in allen Raumrichtungen krümmbaren Korpus, der einerseits von einem Kopfteil und andererseits von einem Endstück begrenzt wird. Der Korpus weist mindestens drei längenmäßig veränderbare Zugoder Druckelemente für das Krümmen des Gerätes bzw. des Korpus auf. Die Zugoder Druckelemente können mechanisch, pneumatisch, hydraulisch, elektrisch oder elektromagnetisch gestellt werden. In einer Ausgestaltung des Gerätes können die Zug- oder Druckelemente aus Drähten aus längenveränderlichen Formgedächtnislegierungen bestehen, die durch Stromwärme betätigt werden können.

### Aufgabe der Erfindung

Der Erfindung liegt daher die Aufgabe zugrunde, die vorstehend genannten Nachteile zumindest teilweise zu vermeiden und Lösungen bereitzustellen, mit denen Inspektions- und/oder Reinigungssysteme in einem Rohr abgestützt und/oder in einem Hohlraum, insbesondere Rohr, verspannt werden können, ohne dass sich das Gesamtgewicht der Inspektions- und/oder Reinigungssysteme deutlich erhöht, die Wartungsintervalle verlängert werden können und auch ohne Stromzufuhr die Inspektions- und/oder Reinigungssysteme aus dem Rohr gezogen werden können, ohne die Abstützvorrichtungen zu beschädigen.

### Erfindungsgemäße Lösung

Erfindungsgemäß wird diese Aufgabe mit einem Abstützmodul sowie mit einem Inspektions- und/oder Reinigungssystem mit einem erfindungsgemäßen Abstützmodul nach den unabhängigen Ansprüchen gelöst. Vorteilhafte Weiterbildungen und Ausgestaltungen der Erfindung sind in den jeweiligen abhängigen Ansprüchen angegeben.

Bereit gestellt wird demnach ein Abstützmodul aufweisend ein Gehäuse und eine Abstützvorrichtung für ein Inspektions- und/oder Reinigungssystem zum Abstützen des Inspektions- und/oder Reinigungssystems an einer Wand, insbesondere Rohrinnenwandung, oder zum Verspannen des Inspektions- und/oder Reinigungssystems in einem Hohlraum, insbesondere Rohr, wobei die Abstützvorrichtung an dem Gehäuse angeordnet ist und wobei die Abstützvorrichtung ein Abstützmittel und ein Stellmittel aufweist, wobei
- das Abstützmittel relativ zum Gehäuse bewegbar ist,
- das Stellmittel mit dem Abstützmittel zusammenwirkt, um bei einer Formänderung des Stellmittels das Abstützmittel relativ zum Gehäuse zu bewegen,
und wobei
- das Stellmittel zumindest ein Formgedächtniselement aufweist, welches in Abhängigkeit von zumindest einer Einflussgröße seine Form reversibel ändert, wobei die Formänderung des Formgedächtniselements das Bewegen des Abstützmittels relativ zum Gehäuse bewirkt.

Zum Bewegen des Abstützmittels kann damit in vorteilhafterweise das Stellmittel bzw. das Formgedächtniselement des Stellmittels aktiviert werden, sodass sich die Form des Formgedächtniselements ändert. Durch diese Änderung des Formgedächtniselements wird das Abstützmittel aus einer Neutralstellung ausgelenkt bzw. angehoben (d.h. relativ zum Gehäuse radial nach außen bewegt), sodass ein gegebenenfalls an dem Abstützmittel angeordnetes Anpressmittel ebenfalls angehoben wird. Bei Bedarf kann das Formgedächtniselement des Stellmittels wieder deaktiviert werden, sodass das Abstützmittel aufgrund einer Rückstellkraft eines Rückstellmittels oder aufgrund seines Eigengewichts wieder in die Neutralstellung zurückkehrt, in der das Formgedächtniselement seine ursprüngliche Form aufweist. Damit wird es ermöglicht, dass auch bei einer Unterbrechung der Energieversorgung das Abstützmittel wieder in seine Neutralstellung zurückkehrt und das Inspektionssystem aus dem Kanal bzw. Rohr gezogen werden kann ohne dass das Abstützmittel beschädigt wird.

Vorteilhaft ist es, wenn das Formgedächtniselement des Stellmittels
- einerseits direkt oder indirekt mit dem Abstützmittel gekoppelt ist und/oder
- andererseits direkt oder indirekt mit dem Gehäuse gekoppelt ist.

Das Formgedächtniselement kann ein längliches Formgedächtniselement, insbesondere Formgedächtnisdraht, umfassen, das in Abhängigkeit von der Einflussgröße seine Länge ändert, vorzugsweise verringert.

Das Stellmittel zusätzlich zumindest ein Zugelement aufweisen, welches
- einerseits direkt oder indirekt mit dem Formgedächtniselement und/oder
- andererseits direkt oder indirekt mit dem Abstützmittel oder mit dem Gehäuse verbunden ist.

Das Stellmittel kann einen Flaschenzug aufweisen, wobei das Formgedächtniselement Teil des Flaschenzuges sein kann. Dies hat den Vorteil, dass das Formgedächtniselement für ein Auslenken bzw. Anheben des Abstützmittels geringere Kräfte zur Verfügung stellen muss, sodass auch kostengünstige Formgedächtniselemente zum Einsatz kommen können.

Die Einflussgröße kann die Temperatur des Formgedächtniselements sein, wobei die für ein vorbestimmtes Bewegen des Abstützmittels relativ zum Gehäuse benötigte Temperatur dem Formgedächtniselement direkt oder indirekt beaufschlagbar ist. In Abhängigkeit von der beaufschlagten Temperatur ist es damit in vorteilhafter Weise möglich, das Abstützmittel um unterschiedliche Amplituden auszulenken bzw. anzuheben.

Das Formgedächtniselement kann mit einer Steuer- und/oder Regeleinrichtung gekoppelt sein, die angepasst ist, das Formgedächtniselement mit der für ein vorbestimmtes Bewegen des Abstützmittels relativ zum Gehäuse benötigten Temperatur zu beaufschlagen.

Die Steuer- und/oder Regeleinrichtung kann angepasst sein, elektrischen Strom in das Formgedächtniselement einzuspeisen oder durch das Formgedächtniselement zu leiten, um es dadurch zu erwärmen.

Es hat sich als vorteilhaft herausgestellt, wenn die Abstützvorrichtung mindestens ein mit dem Abstützmittel zusammenwirkendes Rückstellmittel aufweist, wobei eine Rückstellkraft des Rückstellmittels entgegen einer Stellkraft des Stellmittels wirkt. Bei einer Deaktivierung des Formgedächtniselements des Stellmittels, also bei einer Nicht-Beaufschlagung des Formgedächtniselements mit der Einflussgröße oder bei einer Reduzierung der beaufschlagten Einflussgröße, kann das Abstützmittel wieder in seine Ausgangsposition zurückkehren bzw. wird das Abstützmittel durch das Rückstellmittel wieder in seine Ausgangsposition zurückgebracht.

Das Rückstellmittel kann zumindest ein Federelement umfassen.

Mit den Rückstellmittel kann die Abstützvorrichtung auch bei einer Unterbrechung der Stromversorgung eingefahren werden. Bei einer Unterbrechung der Stromversorgung nehmen die Formgedächtniselemente der Stellmittel wieder ihre ursprüngliche Länge an, sodass die Stellmittel den Rückstellmitteln keine Kraft entgegensetzen.

Das Abstützmittel kann um eine Schwenkachse relativ zum Gehäuse schwenkbar sein, wobei das Stellmittel einerseits an einer dem Gehäuse zugeordneten ersten Befestigungseinheit und andererseits an einer dem Abstützmittel zugeordneten zweiten Befestigungseinheit befestigt ist.

Das Stellmittel kann von der ersten Befestigungseinheit über eine Umlenkstelle zu der zweiten Befestigungseinheit geführt sein, wobei das Stellmittel an der Umlenkstelle umgelenkt ist. Die Umlenkstelle kann eine Umlenkeinrichtung, insbesondere zumindest eine Umlenkrolle umfassen.

In einer Ausgestaltung der Erfindung kann das Abstützmittel um eine Schwenkachse relativ zum Gehäuse schwenkbar sein, wobei die Abstützvorrichtung einen Hubarm aufweist, der
- mit einem ersten Ende an dem Abstützmittel angelenkt ist und
- mit einem zweiten Ende in Längsrichtung oder Querrichtung zum Gehäuse bewegbar an dem Gehäuse angeordnet ist,
wobei das Stellmittel einerseits mit dem Abstützmittel oder mit dem Gehäuse und andererseits mit dem Hubarm gekoppelt ist, wobei die Formänderung des Formgedächtniselements bewirkt, dass das zweite Ende des Hubarms in Richtung Schwenkachse bewegt wird und dadurch einen Winkel zwischen dem Abstützmittel und dem Gehäuse vergrößert.

Dem zweiten Ende des Hubarms kann ein Schlitten zugeordnet sein, an dem das zweite Ende des Hubarms angelenkt ist, wobei der Schlitten in Längsrichtung oder Querrichtung zum Gehäuse bewegbar ist und wobei das Stellmittel mit dem Schlitten gekoppelt ist.

In einer Ausgestaltung der Erfindung kann die Abstützvorrichtung ein erstes Scherenarmpaar und ein zweites Scherenarmpaar aufweisen, die jeweils
- zwei gelenkig miteinander verbundene Scherenarme aufweisen, und
- einerseits an dem Gehäuse und andererseits an dem Abstützmittel angelenkt sind,
wobei zwischen den beiden Scherenarmpaaren das Stellmittel angeordnet ist, das einerseits mit dem ersten Scherenarmpaar und andererseits mit den zweiten Scherenarmpaar gekoppelt ist.

In einer Ausgestaltung der Erfindung kann die Abstützvorrichtung zwei Scherenarme aufweist, die sich in einem Drehpunkt kreuzen und in diesem Drehpunkt um eine Achse drehbar miteinander verbunden sind, wobei zwischen
- den beiden Abschnitten der Scherenarme oberhalb des Drehpunktes und/oder
- den beiden Abschnitten der Scherenarme unterhalb des Drehpunktes
das Stellmittel angeordnet ist und beiderseits unterhalb bzw. oberhalb des Drehpunktes mit den jeweiligen Abschnitten der Scherenarme gekoppelt ist.

In einer Ausgestaltung der Erfindung kann das Abstützmittel linear relativ zum Gehäuse bewegbar, vorzugsweise in radialer Richtung senkrecht zur Längsachse oder Querachse des Gehäuses, an dem Gehäuse angeordnet sein.

Das Stellmittel kann hier
- einerseits an einer dem Gehäuse zugeordneten ersten Befestigungseinheit und
- andererseits an dem Abstützmittel oder an einer dem Abstützmittel zugeordneten zweiten Befestigungseinheit
befestigt sein, wobei das Stellmittel von der ersten Befestigungseinheit über zumindest eine Umlenkstelle, insbesondere zumindest eine Umlenkrolle, zu der zweiten Befestigungseinheit bzw. zu dem Abstützmittel geführt ist, wobei das Stellmittel an der Umlenkstelle umgelenkt ist, wobei die Umlenkstelle so relativ zu dem Abstützmittel angeordnet ist, dass die Formänderung des Formgedächtniselements des Stellmittels das Bewegen des Abstützmittels radial nach außen bewirkt.

In einer Ausgestaltung der Erfindung kann das Abstützmittel ein erstes Keilsegment und ein zweites Keilsegment aufweisen, die jeweils eine schiefe Ebene aufweisen, wobei das erste Keilsegment mit seiner schiefen Ebene an der schiefen Ebene des zweiten Keilsegments angeordnet ist, wobei an dem ersten Keilsegment das Abstützmittel angeordnet ist, wobei das zweite Keilsegment relativ zum ersten Keilsegment verschiebbar ist, sodass das erste Keilsegment angehoben wird, und wobei
- das Stellmittel einerseits an dem zweiten Keilsegment und
- andererseits an dem Gehäuse oder an einer dem Gehäuse zugeordneten ersten Befestigungseinheit befestigt ist,
derart, dass die Formänderung des Formgedächtniselements des Stellmittels das Bewegen des zweiten Keilsegments parallel zur Längsachse oder Querachse des Gehäuses bewirkt. Vorteilhaft ist es hierbei, wenn das erste Keilsegment nur senkrecht zur Längsachse oder Querachse des Gehäuses bewegbar ist, nicht aber parallel zur Längsachse.

In einer Ausgestaltung der Erfindung kann das Abstützmittel eine Anzahl erster Keilsegmente und eine Anzahl zweiter Keilsegmente aufweisen, die jeweils zwei gegenüberliegende schiefe Ebenen und vorzugsweise einen Querschnitt in Form eines gleichschenkeligen Trapezes aufweisen, wobei abwechselnd ein erstes Keilsegment und ein zweites Keilsegment mit ihren jeweiligen schiefen Ebenen zueinander übereinander angeordnet sind, wobei die ersten und zweiten Keilsegmente relativ zueinander verschiebbar sind, wobei
- die Basis der Keilsegmente jeweils über ein Rückstellmittel mit einer Seitenwandung des Gehäuses gekoppelt sind, und
- die der Basis gegenüberliegende Grundfläche der Keilsegmente jeweils über ein Stellmittel mit der Seitenwandung des Gehäuses gekoppelt sind.

Vorteilhaft ist es hierbei, wenn die Seitenwand des Gehäuses flexibel ausgestaltet ist, insbesondere seine Ausdehnung in Längsrichtung veränderbar ist.

An der ersten Befestigungseinheit oder an der zweiten Befestigungseinheit kann eine Platine angeordnet sein, die die Steuer- und/oder Regeleinrichtung aufweist.

In einer Ausgestaltung der Erfindung kann an dem freien Ende des Abstützmittels ein Anpressmittel angeordnet sein. Vorteilhaft ist es, wenn das Anpressmittel um eine Schwenkachse relativ zum Abstützmittel schwenkbar ist. Das Anpressmittel kann ein rutschhemmendes Material, insbesondere einen Kunststoff aufweisen. Das Anpressmittel kann ein Rad umfassen.

Vorteilhaft ist es, wenn die Abstützvorrichtung einen Temperatursensor aufweist, wobei die Steuer- und/oder Regeleinrichtung angepasst ist, in Abhängigkeit von einer gemessenen Umgebungstemperatur das Formgedächtniselement mit der benötigten Temperatur zu beaufschlagen.

Weiter vorteilhaft ist es, wenn die Abstützvorrichtung einen Kraftsensor aufweist, mit dem die Zugkraft des Stellmittels und/oder der Anpressdruck des Abstützmittels oder des Anpressmittels messbar ist, wobei die Steuer- und/oder Regeleinrichtung angepasst ist, in Abhängigkeit von einer gemessenen Zugkraft und/oder Anpressdruck das Formgedächtniselement mit der benötigten Temperatur zu beaufschlagen. Mit dem Kraftsensor kann zudem vermieden werden, dass der dem Formgedächtniselement beaufschlagte Strom begrenzt wird, um Beschädigungen des Stellmittels, des Formgedächtniselements oder der gesamten Abstützvorrichtung zu vermeiden.

Das Abstützmodul kann Anschlussmittel für den Anschluss von Daten- und/oder Stromkabel aufweisen, wobei das Abstützmodul eine Befestigungseinrichtung zum Befestigen des Abstützmoduls an dem Inspektionssystem aufweist. Damit kann jedes beliebige Inspektionssystem mit einem Abstützmodul nachgerüstet bzw. aufgerüstet werden.

Bereit gestellt wird durch die Erfindung des Weiteren ein Inspektionssystem und/oder Reinigungssystem, insbesondere Kanalinspektions- und/oder Reinigungssystem, das ein erfindungsgemäßes Abstützmodul aufweist.

Das Inspektionssystem und/oder Reinigungssystem kann Arbeitsmittel, insbesondere Werkzeuge, aufweisen, wobei die Arbeitsmittel mit der Abstützvorrichtung rohrmittig anordenbar sind.

Das Inspektionssystem und/oder Reinigungssystem kann mit der Abstützvorrichtung in einem Rohr verspannbar sein. Damit kann das Inspektionssystem und/oder Reinigungssystem in vorteilhafter Weise stabilisiert werden, sodass einerseits Wartungsarbeiten präzise durchgeführt werden können und andererseits Erschütterungen des Systems während der Wartungsarbeiten reduziert werden.

### Kurzbeschreibung der Figuren

Weitere Einzelheiten und Merkmale der Erfindung sowie konkrete, insbesondere vorteilhafte Ausführungsbeispiele der Erfindung ergeben sich aus der nachfolgenden Beschreibung in Verbindung mit der Zeichnung. Es zeigt:
- Fig. 1: ein aus dem Stand der Technik bekanntes Inspektionssystems und/oder Reinigungssystems;
- Fig. 2: ein weiteres aus dem Stand der Technik bekanntes Inspektionssystems und/oder Reinigungssystems;
- Fig. 3: ein Ausführungsbeispiel einer erfindungsgemäßen Abstützvorrichtung;
- Fig. 4: ein zweites Ausführungsbeispiel einer erfindungsgemäßen Abstützvorrichtung;
- Fig. 5: ein drittes Ausführungsbeispiel einer erfindungsgemäßen Abstützvorrichtung;
- Fig. 6: ein viertes Ausführungsbeispiel einer erfindungsgemäßen Abstützvorrichtung;
- Fig. 7: ein fünftes Ausführungsbeispiel einer erfindungsgemäßen Abstützvorrichtung;
- Fig. 8: ein sechstes Ausführungsbeispiel einer erfindungsgemäßen Abstützvorrichtung;
- Fig. 9: ein siebtes Ausführungsbeispiel einer erfindungsgemäßen Abstützvorrichtung;
- Fig. 10: ein Schiebekamerasystem mit einer erfindungsgemäßen Abstützvorrichtung in einer Ansicht von vorne;
- Fig. 11: eine alternative erfindungsgemäße Ausgestaltung eines Stellmittels einer erfindungsgemäßen Abstützvorrichtung; und
- Fig. 12: ein weiteres Ausführungsbeispiel einer erfindungsgemäßen Abstützvorrichtung.

### Detaillierte Beschreibung der Erfindung

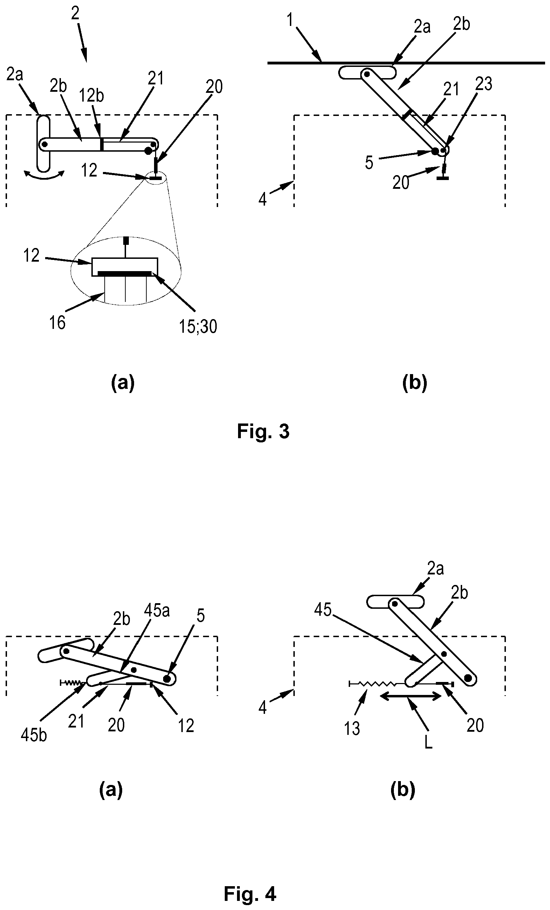

**Fig. 3** zeigt eine erste Ausgestaltung einer erfindungsgemäßen Abstützvorrichtung 2 für ein Inspektionssystem und/oder Reinigungssystem, wobei in Abbildung (a) die Abstützvorrichtung in einer Neutralstellung und in Abbildung (b) die Abstützvorrichtung in einer Arbeitsstellung gezeigt ist.

Die erfindungsgemäße Abstützvorrichtung 2 weist ein Abstützmittel 2b, ein an dem Abstützmittel 2b angeordnetes Anpressmittel 2a und eine Stelleinrichtung auf. Die Abstützvorrichtung 2 ist an einem Gehäuse 4 angeordnet. An dem Gehäuse 4 können mehrere erfindungsgemäße Abstützvorrichtungen 2 angeordnet sein.

Das Gehäuse 4 kann das Gehäuse eines Abstützmoduls sein, das an einem Inspektionssystem, etwa an einem Fahrwagen, oder an einem Arbeitsmittel eines Inspektionssystems angeordnet bzw. befestigt werden kann. Das Gehäuse 4 kann in diesem Fall Anschlussmittel zum Anschluss von Daten- und/oder Stromkabel aufweisen. Zudem kann dass Gehäuse Befestigungseinrichtungen aufweisen, um das Abstützmodul an dem Inspektionssystem zu befestigen.

Das Abstützmittel 2b, das hier als Arm ausgestaltet ist, ist über eine Schwenkachse 5 an dem Gehäuse 4 angelenkt und kann relativ zum Gehäuse 4 von einer Grundstellung bzw. Neutralstellung nach oben in eine Arbeitsstellung geschwenkt werden. Eine Neutralstellung der Abstützvorrichtung 2 ist in Abbildung (a) gezeigt. Eine Arbeitsstellung der Abstützvorrichtung 2 ist in Abbildung (b) gezeigt, wobei ein Anpressmittel 2a gegen eine Rohrinnenwandung 1 gedrückt wird.

An dem der Schwenkachse 5 gegenüberliegenden Ende des Abstützmittels 2b ist ein Anpressmittel 2a schwenkbar an dem Abstützmittel 2b angeordnet.

Erfindungsgemäß weist die Abstützvorrichtung 2 ein Stellmittel auf, das mit dem Abstützmittel 2b zusammenwirkt. Das Stellmittel ist vorgesehen, um das Abstützmittel 2b aus einer Neutralstellung entgegen einer Rückstellkraft eines in Fig. 1 nicht gezeigten Rückstellmittels (z.B. eine Rückstellfeder) auszulenken bzw. nach oben zu schwenken.

Erfindungsgemäß weist das Stellmittel ein Formgedächtniselement 20 auf, das hier als länglicher Formgedächtnisdraht ausgebildet ist.

Das Stellmittel weist hier zusätzlich Zugelemente 21 auf, die hier jeweils mit dem Formgedächtniselement 20 und mit einer ersten Befestigungseinheit 12 bzw. mit einer zweiten Befestigungseinheit 12b verbunden sind. Die erste Befestigungseinheit 12 ist ortsfest an dem Gehäuse befestigt und die zweite Befestigungseinheit 12b ist an dem Abstützmittel 2b befestigt. Als Zugelemente 21 können beispielsweise Drähte, Seile oder dergleichen verwendet werden. Vorteilhaft ist es, wenn die Zugelemente 21 bei Einwirkung einer Zugkraft ihre Länge nicht verändern.

In einer alternativen Ausgestaltung kann auf die Zugelemente 21 auch verzichtet werden und der Formgedächtnisdraht 20 kann direkt an den beiden Befestigungseinheiten 12, 12b befestigt sein.

Bei der in Fig. 3 gezeigten Ausgestaltung ist das Stellmittel (hier das Zugelement 21 des Stellmittels) über eine als Umlenkrolle 23 ausgestaltete Umlenkstelle von der ersten Befestigungseinheit 12 zur zweiten Befestigungseinheit 12b geführt, wobei das Stellmittel an der Umlenkrolle 23 umgelenkt wird. Zudem verläuft das Stellmittel zwischen der Umlenkrolle 23 und der zweiten Befestigungseinheit 12b im Wesentlichen parallel zur Längsachse des Abstützmittels 2b. Vorzugsweise sind der dem Abstützmittel 2b zugeordnete Abschnitt des Stellmittels und die zweite Befestigungseinheit 12b im Inneren bzw. in rohrförmig ausgestalteten Abschnitten des Abstützmittels 2b angeordnet.

Zum Auslenken bzw. Nach-Oben-Schwenken des Abstützmittels 2b aus seiner Neutralstellung wird das Stellmittel verkürzt, indem das Formgedächtniselement 20 mit einer physikalischen Größe beaufschlagt wird, die eine Formänderung des Formgedächtniselements 20 bewirkt. Die Formänderung des Formgedächtniselements 20 ist vorzugsweise dergestalt, dass sich bei Beaufschlagung des Formgedächtniselements 20 mit der physikalischen Größe die Länge des Formgedächtniselements reduziert. Aufgrund der reduzierten Länge des Formgedächtniselements 20 reduziert sich auch die Gesamtlänge des Stellmittels. Durch das Verkürzen des Stellmittels wirkt auf die zweite Befestigungseinheit 12b eine Zugkraft, die das Abstützmittel 2b nach oben schwenkt.

Bei der hier gezeigten Ausgestaltung einer erfindungsgemäßen Abstützvorrichtung 2 und bei den nachfolgend beschriebenen Ausgestaltungen einer erfindungsgemäßen Abstützvorrichtung 2 werden für das Formgedächtniselement 20 solche Materialien verwendet, die bei einer Temperaturveränderung, beispielsweise bei einer Temperaturerhöhung, ihre Form bzw. Länge verändern.

Die Verwendung von Formgedächtniselementen als Stellmittel oder Bestandteil des Stellmittels hat den Vorteil, dass dadurch sehr hohe Stellkräfte bei sehr geringem Materialeinsatz und sehr geringem Platzbedarf erreicht werden können. Damit kann ein besonders Platz sparendes Stellmittel zur Verfügung gestellt werden. Zudem unterliegen die Formgedächtniselemente keinem oder einem nur sehr geringen Verschleiß, wodurch die Wartungsintervalle für die Wartung der erfindungsgemäßen Abstützvorrichtung 2 verlängert werden können. Des Weiteren weist das Stellmittel gegenüber hydraulischen/pneumatischen Systemen, die ebenfalls verwendet werden können, um das Abstützmittel 2b nach oben zu schwenken, nur ein sehr geringes Gewicht auf, sodass das Gewicht des gesamten Inspektions- bzw. Reinigungssystems reduziert werden kann.

Als vorteilhaft hat sich herausgestellt, wenn für das Formgedächtniselement 20 Formgedächtnislegierungen oder Formgedächtnispolymere verwendet werden, die den sogenannten Zwei-Weg-Effekt aufweisen, d.h. beim Abkühlen wieder ihre ursprüngliche Form bzw. ursprüngliche Länge einnehmen. Vorteilhafte Formgedächtnislegierungen sind beispielsweise Nickel-Titan, Nickel-Titan-Kupfer, Kupfer-Zink, Kupfer-Zink-Aluminium, Kupfer-Aluminium-Nickel, Eisen-Nickel-Aluminium, Eisen-Mangan, Silizium oder Zink-Gold-Kupfer.

Die zum Verkürzen des Formgedächtniselements 20 erforderliche Erwärmung kann beispielsweise über Widerstandselemente, über induktive Erwärmung oder dergleichen bewirkt werden. Beispielsweise kann die Beheizung des Formgedächtniselements 20 auf direktem Weg erfolgen, indem ein über das Formgedächtniselement 20 geführter Strom zu dessen Aufheizung aufgrund des ohmschen Widerstandes führt.

In einer einfachen Form wird das Formgedächtniselement 20 mit einem elektrischen Strom beaufschlagt, der eine entsprechende Erwärmung des Formgedächtniselements bewirkt. Hierzu kann das Formgedächtniselement 20 mit einer Steuerund/oder Regeleinrichtung 30 gekoppelt sein, die auf einer Platine 15 angeordnet ist. Die Platine 15 kann an der ersten Befestigungseinheit 12 angeordnet sein und weist Anschlüsse für Steuer- und/oder Datenkabel 16 auf. Die erste Befestigungseinheit 12 ist in Fig. 3 vergrößert dargestellt. Über die Steuer-/Datenkabel 16 kann die Steuer- und/oder Regeleinrichtung 30 mit einer außerhalb des Kanalrohres angeordneten Kontrolleinrichtung verbunden sein, um die Abstützvorrichtung 2 zu steuern.

Die Abstützvorrichtung 2 bzw. die Steuer- und/oder Regeleinrichtung 30 kann einen Temperatursensor aufweisen, wobei die Steuer- und/oder Regeleinrichtung angepasst ist, in Abhängigkeit von einer gemessenen Umgebungstemperatur das Formgedächtniselement 20 mit der benötigten Temperatur bzw. Strom zu beaufschlagen.

Die Steuer- und/oder Regeleinrichtung 30 kann angepasst sein, über die Steuer-/Datenkabel 16 Daten zu empfangen, die einen Sollwinkel umfassen, und für den Sollwinkel die benötigte Temperatur bzw. den benötigten Strom zu ermitteln, mit der/dem das Formgedächtniselement 20 zu beaufschlagen ist, wobei die zu beaufschlagende Temperatur/Strom gegebenenfalls von der Umgebungstemperatur abhängig sein kann. Die/der für den Sollwinkel benötigte Temperatur/Strom kann beispielsweise anhand einer in der Steuer- und/oder Regeleinrichtung hinterlegten Kennlinie ermittelt werden, wobei die Kennlinie abhängig von dem Material des Formgedächtniselements 20 ist. In der Steuer- und/oder Regeleinrichtung können Kennlinien für verschiedene Materialien hinterlegt sein.

Der Abstützvorrichtung 2, d.h. dem Abstützmittel 2b und/oder dem Anpressmittel 2a und/oder dem Stellmittel kann zudem ein Kraftsensor zugeordnet sein, mit dem die Zugkraft des Stellmittels und/oder die Anpresskraft des Abstützmittels 2b und/oder des Anpressmittels 2a detektiert werden kann. Die Steuer- und/oder Regeleinrichtung 30 kann angepasst sein, in Abhängigkeit der Anpresskraft und/oder der Zugkraft den dem Stellmittel zu beaufschlagenden Strom zu erhöhen oder zu verringern.

Dabei kann beispielsweise der Strom solange erhöht werden, bis eine vorbestimmte Anpresskraft und/oder Zugkraft erreicht wird. Dadurch kann einerseits eine optimale Verspannung des Inspektionssystems in einem Rohr gewährleistet werden. Andererseits wird dadurch vermieden, dass die Anpresskraft und/oder Zugkraft soweit erhöht wird, dass Beschädigungen der Abstützvorrichtung 2, insbesondere an dem Stellmittel auftreten.

In einer Ausgestaltung der Erfindung können mehrere an dem Gehäuse 4 oder an dem Inspektionssystem angeordnete erfindungsgemäße Abstützvorrichtungen 2 unabhängig voneinander betätigt werden. Ferner können mehrere Abstützmodule an einem Inspektionssystem angeordnet werden.

In Abbildung (b) der Fig. 3 ist ein Inspektionssystem gezeigt, bei dem sich eine erfindungsgemäße Abstützvorrichtung 2 in einer Arbeitsstellung befindet. Das Anpressmittel 2a des Abstützmittels 2b liegt an der oberen Innenwandung 1 eines Rohres an bzw. wird gegen die Innenwandung gepresst.

Das Anpressmittel 2a kann ein rutschhemmendes Material aufweisen, etwa einen Kunststoff. Vorzugweise ist das Material ein abriebfestes Material.

**Fig. 4** zeigt eine schematische Ausführungsform einer erfindungsgemäßen Abstützvorrichtung, wobei in Abbildung (a) die Abstützvorrichtung in einer Neutralstellung und in Abbildung (b) die Abstützvorrichtung in einer Arbeitsstellung gezeigt ist.

Die Abstützvorrichtung weist ein Abstützmittel 2b auf, das um eine Drehachse 5 schwenkbar an dem Gehäuse 4 angeordnet ist. Ferner weist die Abstützvorrichtung einen Hubarm 45 auf, der mit einem ersten Ende 45a an dem Abstützmittel 2b angelenkt ist und mit einem zweiten Ende 45b an dem Gehäuse 4 angeordnet ist. Das zweite Ende 45b ist relativ zum Gehäuse 4 in Längsrichtung L bewegbar. Das zweite Ende 45b des Hubarms 45 kann in eine im Gehäuse vorgesehene Führungsschiene eingreifen.

Zwischen dem Abstützmittel 2b und dem Hubarm 45 ist die Stelleinrichtung angeordnet, wobei die Stelleinrichtung einerseits mit dem Abstützmittel 2b und andererseits mit dem Hubarm 45 gekoppelt ist. Durch Aktivieren des Formgedächtniselements 20 des Stellmittels, d.h. durch Beaufschlagen des Formgedächtniselements 20 mit einer Temperatur, wird die Länge des Stellmittels reduziert, was bewirkt, dass der Hubarm 45 in Richtung Drehachse 5 geschwenkt wird und so das Abstützmittel 2b anhebt.

Nach Deaktivieren des Formgedächtniselements 20 bzw. bei einer Reduzierung der dem Formgedächtniselement 20 beaufschlagten Temperatur verlängert sich das Formgedächtniselement wieder und das Abstützmittel 2b wird wieder nach unten geschwenkt, wobei auch der Hubarm 45 von der Drehachse 5 wegeschwenkt wird.

Das zweite Ende 45b des Hubarms 45 kann an einem hier nicht gezeigten Schlitten angelenkt sein, der in einer in dem Gehäuse 4 vorgesehenen Führung in Längsrichtung L hin und her bewegbar ist. In diesem Fall ist Stellmittel vorzugsweise mit dem Schlitten verbunden.

Am zweiten Ende 45b des Hubarms 45 ist hier eine Rückstellfeder 13 angeordnet, dessen Federkraft im Wesentlichen entgegen der Stellkraft des Stellmittels wirkt. Das Verbringen der Abstützvorrichtung in ihre Neutralstellung kann so unterstützt werden, indem die Rückstellfeder 13 nach einer Deaktivierung des Formgedächtniselements 20 den Hubarm 45 von der Schwenkachse 5 wegzieht.

In einer Ausgestaltung kann auf die Rückstellfeder 13 verzichtet werden, wenn das Eigengewicht des Abstützmittels 2b und/oder des Anpressmittels 2a ausreicht, um das Abstützmittel 2b bei einer Deaktivierung des Formgedächtniselements 20 nach unten zu drücken.

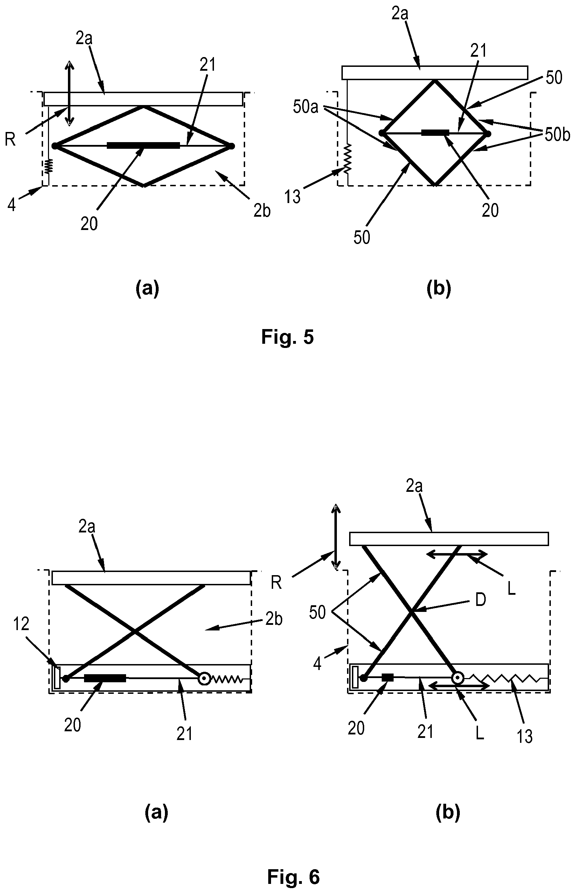

**Fig. 5** zeigt eine weitere Ausgestaltung einer erfindungsgemäßen Abstützvorrichtung, wobei in Abbildung (a) die Abstützvorrichtung in einer Neutralstellung und in Abbildung (b) die Abstützvorrichtung in einer Arbeitsstellung gezeigt ist.

Bei der in Fig. 5 gezeigten Ausgestaltung wird das Anpressmittel 2a linear und in radialer Richtung R relativ zum Gehäuse 4 bewegt.

Die Abstützvorrichtung weist hier zwei Scherenarmpaare 50a, 50b auf, die jeweils zwei gelenkig miteinander verbundene Scherenarme 50 aufweisen. Die beiden Scherenarmpaare 50a, 50b sind jeweils einerseits gelenkig mit dem Anpressmittel 2a und andererseits gelenkig mit dem Gehäuse 4 verbunden.

Zwischen den beiden Scherenarmpaare 50a, 50b ist das Stellmittel angeordnet, das einerseits mit dem ersten Scherenarmpaar 50a und andererseits mit dem zweiten Scherenarmpaar 50b gekoppelt ist. Durch Aktivieren des Formgedächtniselements 20 des Stellmittels wird die Länge des Stellmittels reduziert, sodass sich der Abstand zwischen den Gelenken der beiden Scherenarmpaare 50a, 50b ebenfalls reduziert. Weil die beiden Scherenarmpaare 50a, 50b an dem Anpressmittel 2a und an dem Gehäuse 4 angelenkt sind, vergrößert sich der Winkel zwischen den Scherenarmen 50 der Scherenarmpaare 50a, 50b, sodass das Anpressmittel 2a angehoben wird.

Bei einer Deaktivierung des Formgedächtniselements 20 verringert sich der Winkel zwischen den Scherenarmen 50 der Scherenarmpaare 50a, 50b wieder, sodass das Anpressmittel 2a wieder abgesenkt wird. Sollte das Eigengewicht des Anpressmittels 2a nicht ausreichend sein, kann zwischen dem Anpressmittel 2a und dem Gehäuse eine Rückstellfeder 13 vorgesehen sein, die das Anpressmittel 2a nach unten zieht.

**Fig. 6** zeigt eine weitere Ausgestaltung einer erfindungsgemäßen Abstützvorrichtung, wobei in Abbildung (a) die Abstützvorrichtung in einer Neutralstellung und in Abbildung (b) die Abstützvorrichtung in einer Arbeitsstellung gezeigt ist.

Die Abstützvorrichtung weist hier zwei Scherenarme 50 auf, die sich in einem Drehpunkt D kreuzen und in diesem Drehpunkt D um eine Achse drehbar miteinander verbunden sind. Zwischen den beiden unterhalb des Drehpunktes D verlaufenden Scherenarmen 50 ist ein Stellmittel angeordnet, das einerseits mit dem linken Scherenarm und andererseits mit dem rechten Scherenarm gekoppelt ist, und zwar jeweils unterhalb des Drehpunktes D. Alternativ kann das Stellmittel in entsprechender Weise auch oberhalb des Drehpunktes D angeordnet werden.

Der eine Scherenarm ist schwenkbar an dem Gehäuse 4 angelenkt und in Längsrichtung L relativ zum Anpressmittel 2a bewegbar an dem Anpressmittel 2a angeordnet. Der andere Scherenarm ist schwenkbar an dem Anpressmittel 2a angelenkt und in Längsrichtung L relativ zum Gehäuse 4 bewegbar an dem Gehäuse 4 angeordnet. An den beiden in Längsrichtung L bewegbaren Enden der Scherenarme können Rollen angeordnet sein, die einer in dem Anpressmittel 2a bzw. in dem Gehäuse 4 vorgesehenen Führung verlaufen.

Bei einer Beaufschlagung des Formgedächtniselements 20 des Stellmittels mit einer Temperatur wird die Gesamtlänge des Stellmittels verkürzt, sodass der Abstand der beiden unteren Enden der Scherenarme 50 reduziert wird und wegen der Verbindung der beiden Scherenarme in dem Drehpunkt D die Gesamthöhe der Scherenarmanordnung vergrößert wird, was zu einer Anhebung des Anpressmittels 2a führt.

Ferner können an einem oder an beiden in Längsrichtung bewegbaren Enden der Scherenarme Rückstellmittel, z.B. Rückstellfedern 13 vorgesehen sein, dessen Rückstellkraft entgegen der Stellkraft des Stellmittels wirkt, um bei einer Deaktivierung des Formgedächtniselements 20 die beiden unteren bzw. oberen Enden der Scherenarme wieder auseinander zu ziehen und so das Anpressmittel 2a abzusenken. Bei einem ausreichend großen Eigengewicht des Anpressmittels 2a kann auf die Rückstellfedern 13 auch verzichtet werden.

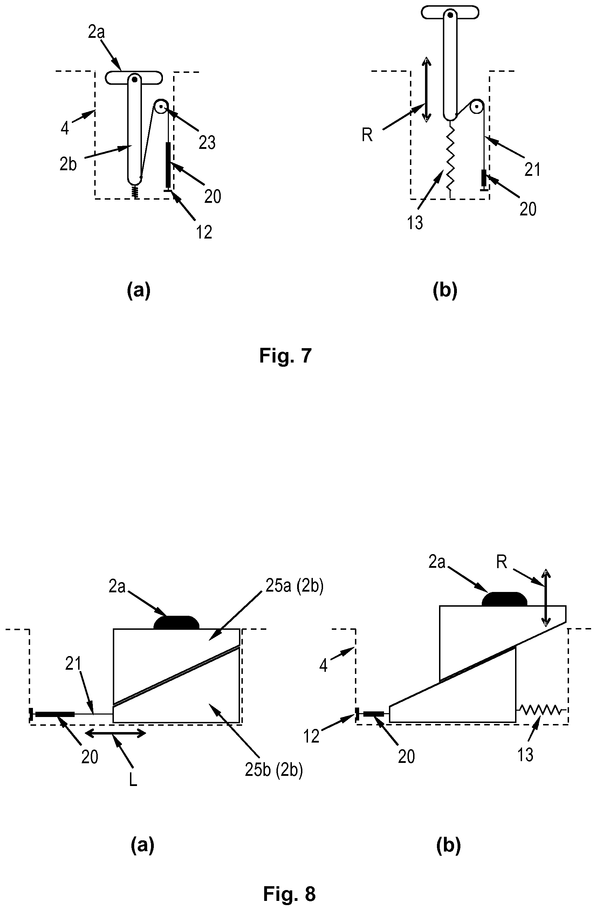

**Fig. 7** zeigt eine weitere Ausgestaltung einer erfindungsgemäßen Abstützvorrichtung, wobei in Abbildung (a) die Abstützvorrichtung in einer Neutralstellung und in Abbildung (b) die Abstützvorrichtung in einer Arbeitsstellung gezeigt ist.

An dem oberen Ende des Abstützmittels 2b ist das Anpressmittel 2a angeordnet. An dem unteren Ende des Abstützmittels 2b ist das Stellmittel befestigt. Das Stellmittel kann entweder direkt oder mittels einer zweiten Befestigungseinheit an dem Abstützmittel 2b befestigt sein. Das andere Ende des Stellmittels ist an dem Gehäuse oder an einer dem Gehäuse 4 zugeordneten ersten Befestigungseinheit 12 befestigt. Das Stellmittel wird über eine Umlenkrolle 23 umgelenkt, wobei die Umlenkrolle 23 so relativ zum Abstützmittel 2b angeordnet ist, dass sich die Koppelstelle, an der das Stellmittel an dem Abstützmittel 2b befestigt ist, in der Neutralstellung der Abstützvorrichtung unterhalb der Umlenkrolle 23 befindet.

Durch Aktivierung des Formgedächtniselements 20 verkürzt sich das Stellmittel und das Abstützmittel 2b wird linear nach oben bewegt. Nach Deaktivierung des Formgedächtniselements dehnt sich dieses aus und das Stellmittel nimmt seine ursprüngliche Länge ein. Am unteren Ende des Abstützmittels 2b ist hier eine Rückstellfeder 13 angeordnet, die nach dem Deaktivieren des Formgedächtniselements 20 die Abstützvorrichtung wieder in ihre Grundstellung bzw. Neutralstellung zurückholt.

**Fig. 8** zeigt eine weitere Ausgestaltung einer erfindungsgemäßen Abstützvorrichtung, wobei in Abbildung (a) die Abstützvorrichtung in einer Neutralstellung und in Abbildung (b) die Abstützvorrichtung in einer Arbeitsstellung gezeigt ist.

Das Abstützmittel 2b weist hier zwei Keilsegmente bzw. keilförmige Blöcke 25a, 25b auf. Die Keilsegmente weisen jeweils eine schräge Ebene auf, wobei die Keilsegmente 25a, 25b so übereinander angeordnet sind, dass die schrägen Ebenen einander zugewandt bzw. aufeinanderliegen sind. An dem oberen Keilsegment 25a ist das Anpressmittel 2a angeordnet.

Zwischen dem unteren Keilsegment 25b und dem Gehäuse 4 bzw. Seitenwandung des Gehäuses 4 ist das Stellmittel angeordnet, wobei dieses einerseits mit dem unteren Keilsegment 25b und andererseits mit der Seitenwandung bzw. mit einer der Seitenwandung zugeordneten ersten Befestigungseinheit 12 gekoppelt ist. Durch Aktivieren des Formgedächtniselements 20 des Stellmittels wird das untere Keilsegment 25b in Längsrichtung L verschoben, sodass aufgrund der beiden zueinander angeordneten schiefen Ebenen der beiden Keilsegmente das obere Keilsegment 25a nach oben bzw. in radialer Richtung R relativ zum Gehäuses 4 bewegt wird. Das obere Keilsegment 25a kann hier nur in radialer Richtung R bewegt werden. Dies kann etwa dadurch gewährleistet werden, dass in dem oberen Keilsegment 25a radial verlaufende Führungsmittel vorgesehen werden.

An der Basis des unteren Keilsegments 25b kann eine Rückstellfeder 13 angeordnet sein, dessen Rückstellkraft entgegen der Stellkraft des Stellmittels wirkt, um das untere Keilsegment 25b bei oder nach einer Deaktivierung des Formgedächtniselements wieder in seine Ausgangsposition zu ziehen.

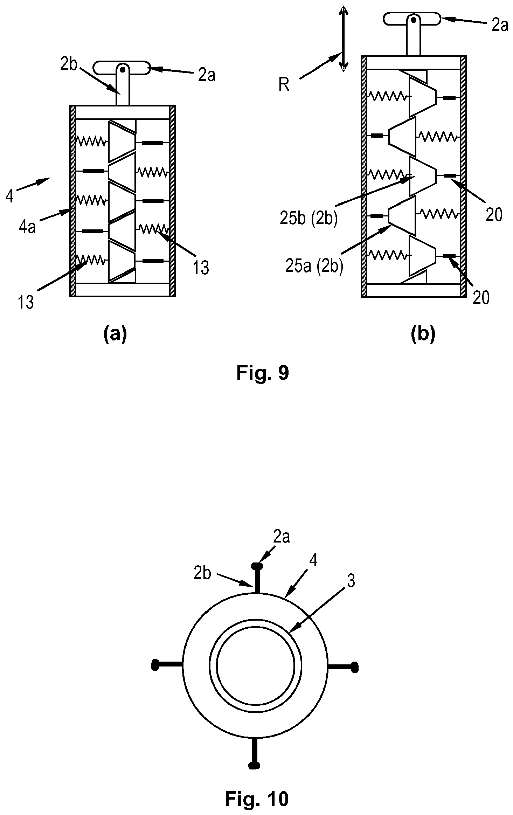

**Fig. 9** zeigt eine weitere Ausgestaltung einer erfindungsgemäßen Abstützvorrichtung, wobei in Abbildung (a) die Abstützvorrichtung in einer Neutralstellung und in Abbildung (b) die Abstützvorrichtung in einer Arbeitsstellung gezeigt ist.

Die Ausgestaltung gemäß Fig. 9 beruht auf demselben physikalischen Prinzip wie die Ausgestaltung gemäß Fig. 8. Im Unterschied zu Fig. 8 sind hier allerdings mehr als zwei Keilsegmente 25a, 25b übereinander angeordnet. Die Keilsegmente 25a, 25b weisen jeweils zwei gegenüberliegende schiefe Ebenen auf, wobei die Keilsegmente jeweils einen Querschnitt in Form eines gleichschenkeligen Trapezes aufweisen. Die ersten Keilsegmente 25a und zweiten Keilsegmente 25b sind jeweils abwechselnd übereinander angeordnet, wobei die schiefe Ebene des einen Keilsegments an der schiefen Ebene des anderen Keilsegments angeordnet ist und wobei die Basisflächen der ersten Keilsegmente 25a gegenüber den Basisflächen der zweiten Keilsegmente 25b liegen.

An den der Basisfläche gegenüberliegenden Fläche der Keilsegmente ist jeweils ein Stellmittel befestigt. Mit dem anderen Ende ist das Stellmittel an der Seitenwandung 4a des Gehäuses 4 befestigt. An der Basisfläche ist jeweils eine Rückstellfeder 13 befestigt. Das andere Ende der Rückstellfeder 13 ist ebenfalls an der Seitwandung 4a des Gehäuses 4 befestigt.

Durch Aktivierung der Formgedächtniselemente 20 werden die Keilsegmente abwechselnd nach links und nach rechts bewegt, sodass jedes der Keilsegmente das jeweils darüber angeordnete Keilsegment anhebt. Nach Deaktivierung der Formgedächtniselemente 20 kehren diese aufgrund der Rückstellkraft der Federelemente 13 wieder in Ihre Ausgangstellung zurück, wie in Abbildung (b) der Fig. 9 gezeigt.

Bei der in Fig. 9 gezeigten Ausgestaltung ist es vorteilhaft, wenn die Seitenwandung 4a des Gehäuses 4 zumindest abschnittsweise flexibel ausgestaltet ist, sodass die Seitenwandung die durch die Formgedächtniselemente 20 bewirkte Höhenveränderung der Keilsegmentanordnung mitmachen kann. Die Seitenwandung kann etwa aus einem flexiblen Kunststoffmaterial bestehen und etwa in Form eines Schlauches ausgestaltet sein. Alternativ kann die Seitenwandung teleskopartig ausgestaltet sein und aus einem stabilen Material bestehen.

**Fig. 10** zeigt eine erfindungsgemäße Inspektionseinrichtung in einer Ansicht von vorne.

In einem Gehäuse 4 ist eine Kameraeinheit 3 angeordnet. An dem Gehäuse 4 sind vier Abstützvorrichtungen angeordnet, die in Umkreisrichtung gleichmäßig verteilt angeordnet sind. An den Abstützmitteln 2b der Abstützvorrichtungen ist jeweils ein Anpressmittel 2a beweglich bzw. schwenkbar befestigt. Die vier Abstützvorrichtungen befinden sich hier in einer Arbeitsstellung und sind jeweils gleich weit ausgefahren, sodass - unter der Annahme, dass alle vier Anpressmittel 2a die Innenwandung eines Rohres berühren - die optische Achse der Kameraeinheit 3 auf der zentralen Längsachse des Rohres liegt.

Weiter hinten am Gehäuse können weitere vier Abstützvorrichtungen angeordnet sein.

Anstelle einer Kameraeinheit 3 können an dem Gehäuse auch andere Arbeitsmittel, etwa Greifeinrichtungen, Fräseinrichtungen oder Spüleinrichtungen angeordnet sein. Die Arbeitsmittel können auch an einem Fahrwagen angeordnet sein, wobei an dem Fahrwagen auch eine Anzahl von Abstützvorrichtungen vorgesehen sein können, mit denen der Fahrwagen in dem Rohr verspannt oder abgestützt werden kann.

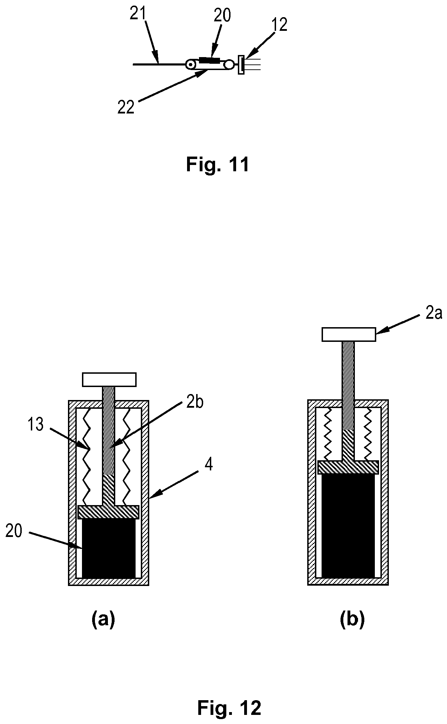

**Fig. 11** zeigt eine Weiterbildung eines Stellmittels einer erfindungsgemäßen Abstützvorrichtung.

Der Unterschied zu den vorstehend beschriebenen Stellmitteln besteht darin, dass das Formgedächtniselement 20 Bestandteil eines Flaschenzuges 22 ist, wobei die Zugelemente 21 an dem Flaschenzug 22 befestigt sind.

In dem Flaschenzug 22 ist das Formgedächtniselement 20 angeordnet, dessen Länge sich bei Erwärmung reduziert, sodass sich der Abstand zwischen den beiden Rollen des Flaschenzuges 22 ebenfalls reduziert und damit auch die Gesamtlänge des Stellmittels verringert wird.

Die Verwendung eines Flaschenzuges 22 als Bestandteil des Stellmittels hat den Vorteil, dass die von dem Formgedächtniselement 20 zur Verfügung zu stellenden Stellkräfte niedrig gehalten werden, sodass auch kostengünstige Materialien für das Formgedächtniselement verwendet werden können.

In einer Ausgestaltung der Erfindung kann ein Sensor vorgesehen sein, mit dem der Rohrdurchmesser eines Rohres detektiert werden kann. Die Steuer- und/oder Regeleinrichtung 30 kann dann angepasst sein, die dem Formgedächtniselement 20 zu beaufschlagende Temperatur in Abhängigkeit von dem detektierten Rohrdurchmesser zu bestimmen.

**Fig. 12** zeigt ein weiteres Ausführungsbeispiel einer erfindungsgemäßen Abstützvorrichtung, wobei in Abbildung (a) die Abstützvorrichtung in einer Neutralstellung und in Abbildung (b) die Abstützvorrichtung mit einem ausgefahrenen Abstützmittel 2b gezeigt ist.

Die in Fig. 12 gezeigte Abstützvorrichtung ähnelt einem Pneumatik- bzw. Hydraulikzylinder. Das Gehäuse 4 wird durch ein zylinderförmiges (z.B. kreiszylinderförmiges) Gehäuse gebildet, in dem ein als Kolbenstange ausgestaltetes Abstützmittel 2b angeordnet ist. Die Kolbenstange 2b ist mit einem Ende aus dem Gehäuse 4 herausgeführt.

Das außenliegende Ende der Kolbenstange 2b kann vorgesehen sein, um dort Arbeitsmittel oder Arbeitsmittelträger bzw. Befestigungseinrichtungen anzuordnen oder zu befestigen. Vorliegend ist hier ein Anpressmittel 2a angeordnet.

Im Inneren des Gehäuses 4 ist ein Stellmittel 20 angeordnet, das hier aus einem Formgedächtnismaterial besteht. Das Stellmittel 20 ist zwischen dem Boden des Gehäuses 4 und dem innenliegenden Ende der Kolbenstange 2b angeordnet, sodass das Stellmittel 20 auf die Kolbenstange 2b wirken kann. Vorzugsweise ist das Stellmittel am Boden des Gehäuses befestigt.

Bei Beaufschlagung des Stellmittels 20 mit einer Temperatur vergrößert sich die Länge des Stellmittels 20, sodass das innenliegende Ende der Kolbenstange 2b mit einer Schubkraft beaufschlagt wird. Die Schubkraft bewirkt ein Bewegen der Kolbenstange 2b relativ zum Gehäuse 4, sodass die Kolbenstange 2b aus dem Gehäuse heraus bewegt wird, wie in Abbildung (b) gezeigt.

Wird das Stellmittel 20 mit keiner Temperatur mehr beaufschlagt, kehrt das Stellmittel 20 in seine ursprüngliche Form zurück bzw. nimmt seine ursprüngliche Länge ein, wie in Abbildung (a) gezeigt. Das Eigengewicht der Kolbenstange 2b bewirkt dann, dass die Kolbenstange 2b wieder in das Gehäuse hinein bewegt wird und die Abstützvorrichtung wieder in die Neutralstellung zurückkehrt.

Für den Fall, dass das Eigengewicht der Kolbenstange nicht ausreicht, damit sie selbstständig in die Neutralstellung zurückkehrt, können der Kolbenstange Rückstellmittel 13 zugeordnet werden, die entgegen der Stellkraft des Stellmittels 20 wirken. Bei der in Fig. 12 gezeigten Ausführungsform sind im Inneren des Gehäuses 4 als Druckfedern ausgestaltete Rückstellmittel angeordnet.

Die in Fig. 12 gezeigte Ausgestaltung einer Abstützvorrichtung hat gegenüber einem Pneumatik- bzw. Hydraulikzylinder den Vorteil, dass keine unter Druck stehenden Flüssigkeiten oder Gase dem Gehäuse 4 zugeführt werden muss. Es muss lediglich ein Stromkabel zugeführt werden, um das Formgedächtnismaterial 20 mit Strom zu beaufschlagen, damit sich diese entsprechend erwärmen kann. Der konstruktive Aufwand der Abstützvorrichtung wird so im Vergleich zu Pneumatik- bzw. Hydraulikzylinder erheblich reduziert. Gleichzeitig kann die erfindungsgemäße Abstützvorrichtung besonders kompakt ausgeführt werden. Hinzukommt, dass die in Fig. 12 gezeigte Abstützvorrichtung besonders flexibel einsetzbar ist - es muss lediglich eine entsprechende Stromzufuhr bereitgestellt werden, was erheblich unproblematischer ist, als das Bereitstellen entsprechende Druckleitung für Druckluft bzw. Hydrauliköl.

Bei sämtlichen vorstehend beschriebenen erfindungsgemäßen Abstützvorrichtungen ist es vorgesehen, dass bei einer Unterbrechung der Stromversorgung für die Beaufschlagung der Formgedächtniselemente 20 mit einer Temperatur, die Abstützvorrichtungen selbständig in die jeweilige Neutralstellung zurückkehren. Hierzu kann es vorteilhaft sein, auch dann entsprechende Rückstellmittel 13, etwa Rückstellfedern vorzusehen, wenn das Eigengewicht des Abstützmittels 2b ausreichen würde, um das Abstützmittel in seine Neutralstellung zu bewegen.

Ein weiterer Vorteil der erfindungsgemäßen Abstützvorrichtung liegt darin, dass bei einer Unterbrechung der Stromversorgung die Abstützmittel selbständig bzw. mit Unterstützung der Rückstellmittel wieder in ihre Ausgangsstellung bzw. Neutralstellung zurückkehren. Denn bei einer Unterbrechung der Stromversorgung werden die Formgedächtniselemente nicht mehr mit einem Strom beaufschlagt, sodass diese abkühlen und wieder ihre ursprünglich Länge annehmen. Ein Inspektions-und/oder Reinigungssystem kann so aus dem Rohr bzw. Kanal herausgezogen werden ohne dass die erfindungsgemäße Abstützvorrichtung ein Herausziehen behindern.

### Bezugszeichen:

- 1: Rohr bzw. Innenwandung eines Rohres
- 2: Abstützvorrichtung
- 2a: Anpressmittel
- 2b: Abstützmittel (z.B. schwenkbarer Arm, oder Scherenarme)
- 3: Kameraeinrichtung oder Spülkopf oder sonstiges Werkzeug
- 4: Gehäuse (z.B. einer Bildaufnahmeeinrichtung)
- 4a: seitliche Gehäusewandung
- 5: Schwenkachse
- 12: erste Befestigungseinheit
- 12b: zweite Befestigungseinheit
- 13: Rückstellmittel, z.B. Rückstellfeder
- 15: Platine der Steuer- und/oder Regeleinrichtung 30
- 16: Steuer- und oder Datenkabel
- 20: Formgedächtniselement
- 21: Zugelement
- 22: Flaschenzug
- 23: Umlenkeinrichtung (z.B. Umlenkrolle)
- 25a: erstes Keilsegment (der Abstützmittel 2b)
- 25b: zweites Keilsegment (der Abstützmittel 2b)
- 30: Steuer- und/oder Regeleinrichtung
- 45: Hubarm
- 45a: erstes Ende des Hubarms 45
- 45b: zweites Ende des Hubarms 45
- 50: Scherenarme
- 50a: erstes Scherenarmpaar (der Abstützmittel 2b)
- 50b: zweites Scherenarmpaar (der Abstützmittel 2b)
- 60: Schiebekabel
- D: Drehpunkt zweier sich kreuzender Scherenarme 50
- L: Längsrichtung (Bewegungsrichtung relativ zum Gehäuse 4)

## Patentansprüche

1. Abstützmodul aufweisend ein Gehäuse (4) und eine Abstützvorrichtung (2) für ein Inspektions- und/oder Reinigungssystem zum Abstützen des Inspektions- und/oder Reinigungssystems an einer Wand, insbesondere Rohrinnenwandung (1), oder zum Verspannen des Inspektions- und/oder Reinigungssystems in einem Hohlraum, insbesondere Rohr, wobei die Abstützvorrichtung (2) an dem Gehäuse (4) angeordnet ist und wobei die Abstützvorrichtung (2) ein Abstützmittel (2b) und ein Stellmittel aufweist, wobei
- das Abstützmittel (2b) relativ zum Gehäuse (4) bewegbar ist,
- das Stellmittel mit dem Abstützmittel (2b) zusammenwirkt, um bei einer Formänderung des Stellmittels das Abstützmittel (2b) relativ zum Gehäuse (4) zu bewegen,
**dadurch gekennzeichnet, dass**
- das Stellmittel zumindest ein Formgedächtniselement (20) aufweist, welches in Abhängigkeit von zumindest einer Einflussgröße seine Form reversibel ändert, wobei die Formänderung des Formgedächtniselements (20) das Bewegen des Abstützmittels (2b) relativ zum Gehäuse (4) bewirkt.

2. Abstützmodul nach dem vorhergehenden Anspruch, wobei das Formgedächtniselement (20) des Stellmittels
- einerseits direkt oder indirekt mit dem Abstützmittel (2b) gekoppelt ist und/oder
- andererseits direkt oder indirekt mit dem Gehäuse (4) gekoppelt ist.

3. Abstützmodul nach einem der vorhergehenden Ansprüche, wobei das Formgedächtniselement (20) ein längliches Formgedächtniselement, insbesondere Formgedächtnisdraht, umfasst, das in Abhängigkeit von der Einflussgröße seine Länge ändert, vorzugsweise verringert.

4. Abstützmodul nach einem der vorhergehenden Ansprüche, wobei das Stellmittel zusätzlich zumindest ein Zugelement (21) aufweist, welches
- einerseits direkt oder indirekt mit dem Formgedächtniselement (20) und/oder
- andererseits direkt oder indirekt mit der Abstützmittel (2b) oder mit dem Gehäuse (4)
verbunden ist.

5. Abstützmodul nach einem der vorhergehenden Ansprüche, wobei die Einflussgröße die Temperatur des Formgedächtniselements (20) ist und wobei die für ein vorbestimmtes Bewegen des Abstützmittels (2b) relativ zum Gehäuse (4) benötigte Temperatur dem Formgedächtniselement (20) direkt oder indirekt beaufschlagbar ist, wobei das Formgedächtniselement (20) mit einer Steuer- und/oder Regeleinrichtung (30) gekoppelt ist, die angepasst ist, das Formgedächtniselement (20) mit der für ein vorbestimmtes Bewegen des Abstützmittels (2b) relativ zum Gehäuse (4) benötigten Temperatur zu beaufschlagen und wobei die Steuer- und/oder Regeleinrichtung (30) vorzugsweise angepasst ist, elektrischen Strom in das Formgedächtniselement (20) einzuspeisen oder durch das Formgedächtniselement (20) zu leiten, um es dadurch zu erwärmen.

6. Abstützmodul nach einem der vorhergehenden Ansprüche, wobei die Abstützvorrichtung mindestens ein mit dem Abstützmittel (2b) zusammenwirkendes Rückstellmittel (13) aufweist, wobei eine Rückstellkraft des Rückstellmittels (13) entgegen einer Stellkraft des Stellmittels wirkt, wobei das Rückstellmittel (13) vorzugsweise zumindest ein Federelement umfasst.

7. Abstützmodul nach einem der vorhergehenden Ansprüche, wobei das Abstützmittel (2b) um eine Schwenkachse (5) relativ zum Gehäuse (4) schwenkbar ist, wobei das Stellmittel
- einerseits an einer dem Gehäuse (4) zugeordneten ersten Befestigungseinheit (12) und
- andererseits an einer dem Abstützmittel (2b) zugeordneten zweiten Befestigungseinheit (12b)
befestigt ist, wobei das Stellmittel von der ersten Befestigungseinheit (12) vorzugsweise über eine Umlenkstelle (23) zu der zweiten Befestigungseinheit (12b) geführt ist, wobei das Stellmittel an der Umlenkstelle (23) umgelenkt ist und wobei die Umlenkstelle (23) eine Umlenkeinrichtung, insbesondere eine Umlenkrolle umfasst.

8. Abstützmodul nach einem der Ansprüche 1 bis 6, wobei das Abstützmittel (2b) um eine Schwenkachse (5) relativ zum Gehäuse (4) schwenkbar ist, wobei die Abstützvorrichtung einen Hubarm (45) aufweist, der
- mit einem ersten Ende (45a) an dem Abstützmittel (2b) angelenkt ist und
- mit einem zweiten Ende (45b) in Längsrichtung (L) zum Gehäuse (4) bewegbar an dem Gehäuse (4) angeordnet ist,
wobei das Stellmittel einerseits mit dem Abstützmittel (2b) oder mit dem Gehäuse (4) und andererseits mit dem Hubarm (45) gekoppelt ist, wobei die Formänderung des Formgedächtniselements (20) bewirkt, dass das zweite Ende (45b) des Hubarms (45) in Richtung Schwenkachse (5) bewegt wird und dadurch einen Winkel zwischen dem Abstützmittel (2b) und dem Gehäuse (4) vergrößert, wobei vorzugsweise dem zweiten Ende (45b) des Hubarms (45) ein Schlitten zugeordnet ist, an dem das zweite Ende (45b) des Hubarms (45) angelenkt ist, wobei der Schlitten in Längsrichtung (L) zum Gehäuse (4) bewegbar ist und wobei das Stellmittel mit dem Schlitten gekoppelt ist.

9. Abstützmodul nach einem der Ansprüche 1 bis 6, wobei die Abstützvorrichtung ein erstes Scherenarmpaar (50a) und ein zweites Scherenarmpaar (50b) aufweist, die jeweils
- zwei gelenkig miteinander verbundene Scherenarme (50) aufweisen, und
- einerseits an dem Gehäuse (4) und andererseits an dem Abstützmittel (2b) angelenkt sind,
wobei zwischen den beiden Scherenarmpaaren (50a; 50b) das Stellmittel angeordnet ist, das einerseits mit dem ersten Scherenarmpaar (50a) und andererseits mit den zweiten Scherenarmpaar (50b) gekoppelt ist.

10. Abstützmodul nach einem der Ansprüche 1 bis 6, wobei die Abstützvorrichtung zwei Scherenarme (50) aufweist, die sich in einem Drehpunkt (D) kreuzen und in diesem Drehpunkt um eine Achse drehbar miteinander verbunden sind, wobei zwischen
- den beiden Abschnitten der Scherenarme (50) oberhalb des Drehpunktes (D) und/oder
- den beiden Abschnitten der Scherenarme (50) unterhalb des Drehpunktes (D)
das Stellmittel angeordnet ist und beiderseits unterhalb bzw. oberhalb des Drehpunktes (D) mit den jeweiligen Abschnitten der Scherenarme (50) gekoppelt ist.

11. Abstützmodul nach einem der Ansprüche 1 bis 6, wobei das Abstützmittel (2b) zumindest ein erstes Keilsegment (25a) und ein zweites Keilsegment (25b) aufweist, die jeweils eine schiefe Ebene aufweisen, wobei das erste Keilsegment (25a) mit seiner schiefen Ebene an der schiefen Ebene des zweiten Keilsegments (25b) angeordnet ist, wobei das zweite Keilsegment (25b) relativ zum ersten Keilsegment (25a) und parallel zur Längs- oder Querachse des Gehäuses (4) verschiebbar ist, sodass das erste Keilsegment angehoben wird, und wobei
- das Stellmittel einerseits an dem zweiten Keilsegment (25b) und
- andererseits an dem Gehäuse oder an einer dem Gehäuse (4) zugeordneten ersten Befestigungseinheit (12) befestigt ist,
derart, dass die Formänderung des Formgedächtniselements (20) des Stellmittels das Bewegen des zweiten Keilsegments (25b) parallel zur Längs oder Querachse (LA) des Gehäuses (4) bewirkt.

12. Abstützmodul nach einem der Ansprüche 1 bis 6, wobei das Abstützmittel (2b) eine Anzahl erster Keilsegmente (25a) und eine Anzahl zweiter Keilsegmente (25b) aufweist, die jeweils zwei gegenüberliegende schiefe Ebenen und vorzugsweise einen Querschnitt in Form eines gleichschenkeligen Trapezes aufweisen, wobei abwechselnd ein erstes Keilsegment (25a) und ein zweites Keilsegment (25b) mit ihren jeweiligen schiefen Ebenen zueinander übereinander angeordnet sind, wobei die ersten und zweiten Keilsegmente parallel zur Längs- oder Querachse des Gehäuses (4) relativ zueinander verschiebbar sind, wobei
- die Basis der Keilsegmente (25a; 25b) jeweils über ein Rückstellmittel (13) mit einer Seitenwandung (4a) des Gehäuses (4) gekoppelt sind, und
- die der Basis gegenüberliegende Grundfläche der Keilsegmente (25a; 25b) jeweils über ein Stellmittel mit der Seitenwandung (4a) des Gehäuses (4) gekoppelt sind,
und wobei die Seitenwand (4a) des Gehäuses (4) vorzugsweise flexibel ausgestaltet ist.

13. Abstützmodul nach einem der vorhergehenden Ansprüche, wobei an dem freien Ende des Abstützmittels (2b) ein Anpressmittel (2a) angeordnet ist, wobei das Anpressmittel (2a) vorzugsweise um eine Schwenkachse relativ zum Abstützmittel (2a) schwenkbar ist und wobei das Anpressmittel (2a) ein rutschhemmendes Material, insbesondere einen Kunststoff aufweist und/oder wobei das Anpressmittel (2a) ein Rad umfasst.

14. Abstützmodul nach einem der Ansprüche 1 bis 13, wobei das Abstützmodul Anschlussmittel für den Anschluss von Daten- und/oder Stromkabel aufweist, und wobei das Abstützmodul eine Befestigungseinrichtung zum Befestigen des Abstützmoduls an dem Inspektionssystem aufweist.

15. Inspektionssystem und/oder Reinigungssystem, insbesondere Kanalinspektions- und/oder Reinigungssystem, aufweisend zumindest ein Abstützmodul nach einem der vorhergehenden Ansprüche.

16. Inspektionssystem und/oder Reinigungssystem nach dem vorhergehenden Anspruch, wobei dieses ein Arbeitsmittel, insbesondere Werkzeug, aufweist, wobei das Arbeitsmittel mit der Abstützvorrichtung rohrmittig anordenbar ist, oder wobei dieses mit der Abstützvorrichtung in einem Rohr verspannbar ist.

## Claims

1. Support module comprising a housing (4) and a support device (2) for an inspection and/or cleaning system for supporting the inspection and/or cleaning system against a wall, in particular a pipe inner wall (1), or for bracing the inspection and/or cleaning system in a cavity, in particular a pipe, the support device (2) being arranged on the housing (4) and the support device (2) having a support means (2b) and a positioning means,
- the support means (2b) being movable relative to the housing (4),
- the positioning means interacting with the support means (2b) in order to move the support means (2b) relative to the housing (4) when the positioning means changes shape,
**characterized in that**
- the positioning means comprises at least one shape memory element (20) which reversibly changes its shape according to at least one influencing variable, the change in shape of the shape memory element (20) causing the support means (2b) to move relative to the housing (4).

2. Support module according to the preceding claim, wherein the shape memory element (20) of the positioning means is
- directly or indirectly coupled at one end to the support means (2b) and/or
- directly or indirectly coupled at the other end to the housing (4).

3. Support module according to either of the preceding claims, wherein the shape memory element (20) comprises an elongate shape memory element, in particular a shape memory wire, which changes, preferably reduces, its length according to the influencing variable.

4. Support module according to any of the preceding claims, wherein the positioning means also comprises at least one tension element (21), which is
- directly or indirectly connected at one end to the shape memory element (20), and/or
- directly or indirectly connected at the other end to the support means (2b) or to the housing (4).

5. Support module according to any of the preceding claims, wherein the influencing variable is the temperature of the shape memory element (20) and wherein the temperature required for a predetermined movement of the support means (2b) relative to the housing (4) can be applied to the shape memory element (20) directly or indirectly, wherein the shape memory element (20) is coupled to an open- and/or closed-loop control apparatus (30) which is adapted to apply to the shape memory element (20) the temperature required for a predetermined movement of the support means (2b) relative to the housing (4), and wherein the open- and/or closed-loop control apparatus (30) is preferably adapted to feed electrical current into the shape memory element (20) or to conduct electrical current through the shape memory element (20) in order to heat said element.

6. Support module according to any of the preceding claims, wherein the support device comprises at least one restoring means (13) that interacts with the support means (2b), wherein a restoring force of the restoring means (13) counteracts a positioning force of the positioning means, wherein the restoring means (13) preferably comprises at least one spring element.

7. Support module according to any of the preceding claims, wherein the support means (2b) can be pivoted about a pivot axis (5) relative to the housing (4), wherein the positioning means is fastened
- at one end to a first fastening unit (12) which is assigned to the housing (4), and
- at the other end to a second fastening unit (12b) which is assigned to the support means (2b),
wherein the positioning means extends from the first fastening unit (12) to the second fastening unit (12b), preferably via a deflection point (23), wherein the positioning means is deflected at the deflection point (23) and wherein the deflection point (23) comprises a deflection apparatus, in particular a deflection roller.

8. Support module according to any of claims 1 to 6, wherein the support means (2b) can be pivoted about a pivot axis (5) relative to the housing (4), wherein the support device comprises a lifting arm (45), which is
- hinged to the support means (2b) at a first end (45a), and
- arranged on the housing (4) at a second end (45b) so as to be movable in the longitudinal direction (L) relative to the housing (4),
wherein the positioning means is coupled at one end to the support means (2b) or to the housing (4) and at the other end to the lifting arm (45), wherein the change in shape of the shape memory element (20) causes the second end (45b) of the lifting arm (45) to move in the direction of the pivot axis (5), as a result of which an angle between the support means (2b) and the housing (4) increases, wherein a carriage is preferably assigned to the second end (45b) of the lifting arm (45), to which carriage the second end (45b) of the lifting arm (45) is hinged, wherein the carriage can be moved in the longitudinal direction (L) relative to the housing (4) and wherein the positioning means is coupled to the carriage.

9. Support module according to any of claims 1 to 6, wherein the support device comprises a first scissor arm pair (50a) and a second scissor arm pair (50b), each of which
- comprises two scissor arms (50) that are hinged together, and
- is hinged at one end to the housing (4) and at the other end to the support means (2b),
wherein the positioning means is arranged between the two scissor arm pairs (50a; 50b) and is coupled at one end to the first scissor arm pair (50a) and at the other end to the second scissor arm pair (50b).

10. Support module according to any of claims 1 to 6, wherein the support device has two scissor arms (50) which intersect at a rotary point (D) and are interconnected at said rotary point so as to be able to rotate about an axis, wherein the positioning means is arranged between
- the two portions of the scissor arms (50) above the rotary point (D) and/or
- the two portions of the scissor arms (50) below the pivot point (D)
and is coupled at both ends to the respective portions of the scissor arms (50) below and/or above the pivot point (D).

11. Support module according to any of claims 1 to 6, wherein the support means (2b) has at least a first wedge segment (25a) and a second wedge segment (25b), each of which has an inclined plane, wherein the first wedge segment (25a) is arranged, by means of the inclined plane thereof, on the inclined plane of the second wedge segment (25b), wherein the second wedge segment (25b) can be shifted relative to the first wedge segment (25a) and in parallel with the longitudinal or transverse axis of the housing (4) such that the first wedge segment is raised, and wherein
- the positioning means is fastened at one end to the second wedge segment (25b) and
- at the other end to the housing or to a first fastening unit (12) which is assigned to the housing (4)
such that the change in shape of the shape memory element (20) of the positioning means causes the second wedge segment (25b) to move in parallel with the longitudinal or transverse axis (LA) of the housing (4).

12. Support module according to any of claims 1 to 6, wherein the support means (2b) has a number of first wedge segments (25a) and a number of second wedge segments (25b), each of which has two opposite inclined planes and preferably a cross section in the shape of an isosceles trapezoid, wherein one first wedge segment (25a) and one second wedge segment (25b) are arranged alternatingly one above the other with the inclined planes thereof facing one another, wherein the first and second wedge segments can be shifted relative to one another in parallel with the longitudinal or transverse axis of the housing (4), wherein
- the base of each wedge segment (25a; 25b) is coupled to a side wall (4a) of the housing (4) via a restoring means (13), and
- the bottom surface of each wedge segment (25a; 25b), which surface is opposite the base, is coupled to the side wall (4a) of the housing (4) via a positioning means,
and wherein the side wall (4a) of the housing (4) is preferably designed to be flexible.

13. Support module according to any of the preceding claims, wherein a pressing means (2a) is arranged at the free end of the support means (2b), wherein the pressing means (2a) can preferably be pivoted about a pivot axis relative to the support means (2a) and wherein the pressing means (2a) comprises an anti-slip material, in particular a plastics material, and/or wherein the pressing means (2a) comprises a wheel.

14. Support module according to any of claims 1 to 13, wherein the support module comprises connection means for connecting data cables and/or power cables, and wherein the support module has a fastening apparatus for fastening the support module to the inspection system.

15. Inspection system and/or cleaning system, in particular duct inspection and/or cleaning system, comprising at least one support module according to any of the preceding claims.

16. Inspection system and/or cleaning system according to the preceding claim, wherein said system comprises working equipment, in particular a tool, wherein the working equipment can be arranged in the center of the pipe by means of the support device, or wherein said equipment can be braced in a pipe by means of the support device.

## Revendications

1. Module d'appui comportant un boîtier (4) et un dispositif d'appui (2) pour un système d'inspection et/ou de nettoyage permettant de supporter le système d'inspection et/ou de nettoyage sur une paroi, en particulier la paroi intérieure (1) d'un tuyau, ou de serrer le système d'inspection et/ou de nettoyage dans une cavité, en particulier un tuyau, dans lequel le dispositif d'appui (2) est disposé au niveau du boîtier (4), et dans lequel le dispositif d'appui (2) comporte un moyen d'appui (2b) et un moyen de positionnement, sachant que
- le moyen d'appui (2b) est mobile par rapport au boîtier (4),
- le moyen de positionnement coopère avec le moyen d'appui (2b) pour déplacer le moyen d'appui (2b) par rapport au boîtier (4) lors du changement de la forme du moyen de positionnement,
**caractérisé en ce que**
- le moyen de réglage comporte au moins un élément à mémoire de forme (20) qui change de forme de manière réversible en fonction d'au moins une grandeur d'influence, dans lequel le changement de forme de l'élément à mémoire de forme (20) amène le moyen d'appui (2b) à se déplacer par rapport au boîtier (4).

2. Module d'appui selon la revendication précédente, dans lequel l'élément à mémoire de forme (20) du moyen de réglage
- est, d'une part, directement ou indirectement couplé au moyen d'appui (2b) et/ou
- est, d'autre part, directement ou indirectement couplé au boîtier (4).

3. Module d'appui selon l'une des revendications précédentes, dans lequel l'élément à mémoire de forme (20) comprend un élément à mémoire de forme allongée, en particulier un fil à mémoire de forme, qui change de longueur en fonction de la grandeur d'influence, de préférence diminue.

4. Module d'appui selon l'une des revendications précédentes, dans lequel le moyen de réglage comprend en outre au moins un élément de tension (21) qui,
- d'une part, est directement ou indirectement relié à l'élément à mémoire de forme (20) et/ou,
- d'autre part, est directement ou indirectement relié aux moyens d'appui (2b) ou au boîtier (4).

5. Module d'appui selon l'une des revendications précédentes, dans lequel la grandeur d'influence est la température de l'élément à mémoire de forme (20), et dans lequel la température requise pour un déplacement prédéfini des moyens d'appui (2b) par rapport au boîtier (4) peut être appliquée directement ou indirectement à l'élément à mémoire de forme (20), dans lequel l'élément à mémoire de forme (20) est couplé à un dispositif de commande et/ou de régulation (30), qui est adapté pour appliquer à l'élément à mémoire de forme (20) la température requise pour un déplacement prédéfini des moyens d'appui (2b) par rapport au boîtier (4), et dans lequel le dispositif de commande et/ou de régulation (30) est de préférence adapté pour alimenter l'élément à mémoire de forme (20) en courant électrique ou pour le faire passer à travers l'élément à mémoire de forme (20) afin de chauffer ainsi ledit élément à mémoire de forme.

6. Module d'appui selon l'une des revendications précédentes, dans lequel le dispositif d'appui comporte au moins un moyen de repositionnement (13) coopérant avec le moyen d'appui (2b), dans lequel une force de rappel du moyen de réglage (13) agit contre une force de rappel du moyen de réglage, dans lequel le moyen de réglage (13) comprend de préférence au moins un élément de ressort.

7. Module d'appui selon l'une des revendications précédentes, dans lequel le moyen d'appui (2b) peut pivoter autour d'un axe de pivotement (5) par rapport au boîtier (4), dans lequel le moyen de positionnement
- est fixé, d'une part, à une première unité de fixation (12) associée au boîtier (4), et
- d'autre part, à une seconde unité de fixation (12b) associée au moyen d'appui (2b),
le moyen de réglage étant guidé de la première unité de fixation (12), de préférence par l'intermédiaire d'un point de déviation (23), vers la seconde unité de fixation (12b), ledit moyen de réglage étant dévié au niveau du point de déviation (23) et le point de déviation (23) comprenant un dispositif de déviation, en particulier un rouleau de déviation.

8. Module d'appui selon l'une des revendications 1 à 6, dans lequel le moyen d'appui (2b) peut pivoter autour d'un axe de pivotement (5) par rapport au boîtier (4), dans lequel le moyen d'appui comporte un bras de levage (45), qui
- est articulé par une première extrémité (45a) au niveau du moyen d'appui (2b) et
- est disposé au niveau du boîtier (4) de manière à pouvoir être déplacé par une seconde extrémité (45b) dans la direction longitudinale (L) par rapport au boîtier (4),
dans lequel le moyen de positionnement est couplé, d'une part, au moyen d'appui (2b) ou au boîtier (4), et d'autre part, au bras de levage (45), dans lequel le changement de forme de l'élément à mémoire de forme (20) amène la seconde extrémité (45b) du bras de levage (45) à se déplacer dans la direction de l'axe de pivotement (5), augmentant ainsi l'angle entre le moyen d'appui (2b) et le boîtier (4), dans lequel, de préférence, la seconde extrémité (45b) du bras de levage (45) est associée à un coulisseau, auquel la seconde extrémité (45b) du bras de levage (45) est articulée, dans lequel le coulisseau est mobile dans la direction longitudinale (L) par rapport au boîtier (4), et dans lequel le moyen de réglage est couplé au coulisseau.

9. Module d'appui selon l'une des revendications 1 à 6, le dispositif d'appui comprenant une première paire de bras de ciseaux (50a) et une seconde paire de bras de ciseaux (50b), chaque paire
- comprenant deux bras de ciseaux (50) reliés entre eux de façon souple, et
- étant articulée, d'une part, au boîtier (4) et, d'autre part, au moyen d'appui (2b), dans lequel le moyen de réglage est disposé entre les deux paires de bras de ciseaux (50a ; 50b), lequel moyen de réglage est couplé, d'une part, à la première paire de bras de ciseaux (50a), et d'autre part, à la seconde paire de bras de ciseaux (50b).

10. Module d'appui selon l'une des revendications 1 à 6, dans lequel le dispositif d'appui comporte deux bras de ciseaux (50) qui se croisent au niveau d'un point de pivotement (D) et qui sont reliés au niveau dudit point de pivotement de manière à pouvoir tourner autour d'un axe, dans lequel
- le moyen de positionnement étant disposé entre les deux sections des bras de ciseaux (50) au-dessus du point de pivotement (D) et/ou entre
- les deux sections des bras de ciseaux (50) en dessous du point de pivotement (D)
et ledit moyen de réglage est couplé des deux côtés en dessous et au-dessus du point de pivotement (D) aux sections respectives des bras de ciseaux (50).

11. Module d'appui selon l'une des revendications 1 à 6, dans lequel le moyen d'appui (2b) comprend au moins un premier segment de cale (25a) et un second segment de cale (25b), qui présentent chacun un plan incliné, dans lequel le premier segment de cale (25a) est disposé avec son plan incliné sur le plan incliné du second segment de cale (25b), dans lequel le second segment de cale (25b) est mobile par rapport au premier segment de cale (25a) et parallèlement à l'axe longitudinal ou transversal du boîtier (4), de sorte que le premier segment de cale soit soulevé, et dans lequel
- le moyen de réglage est fixé, d'une part, au second segment de cale (25b), et
- d'autre part, au boîtier ou à une première unité de fixation (12) associée au boîtier (4),
de telle manière que le changement de forme de l'élément à mémoire de forme (20) du moyen de réglage amène le second segment de cale (25b) à se déplacer parallèlement à l'axe longitudinal ou transversal (LA) du boîtier (4).

12. Module d'appui selon l'une des revendications 1 à 6, dans lequel le moyen d'appui (2b) comprend un certain nombre de premiers segments de cale (25a) et un certain nombre de seconds segments de cale (25b), dont chacun comporte deux plans inclinés opposés et de préférence une section transversale sous forme de trapèze isocèle, dans lequel un premier segment de cale (25a) et un second segment de cale (25b) sont disposés alternativement l'un au-dessus de l'autre avec leurs plans inclinés respectifs, dans lequel le premier et le second segment de cale sont mobiles l'un par rapport à l'autre parallèlement à l'axe longitudinal ou transversal du boîtier (4), dans lequel
- les bases des segments de cale (25a ; 25b) sont chacune couplées à une paroi latérale (4a) du boîtier (4) par l'intermédiaire d'un moyen de réglage (13), et
- la surface de base des segments de cale (25a ; 25b) opposée à la base est respectivement couplée à la paroi latérale (4a) du boîtier (4) par l'intermédiaire d'un moyen de réglage,
et dans lequel la paroi latérale (4a) du boîtier (4) est de préférence de conception souple.

13. Module d'appui selon l'une des revendications précédentes, dans lequel un moyen de pression (2a) est disposé à l'extrémité libre du moyen d'appui (2b), dans lequel le moyen de pression (2a) peut de préférence pivoter autour d'un axe de pivotement par rapport au moyen d'appui (2a), et dans lequel le moyen de pression (2a) comprend une matière antidérapante, en particulier une matière plastique et/ou dans lequel le moyen de pression (2a) comprend une roue.

14. Module d'appui selon l'une des revendications 1 à 13, comportant des moyens de connexion pour la connexion de câbles de données et/ou d'alimentation et un dispositif de fixation pour la fixation du module d'appui au système d'inspection.

15. Système d'inspection et/ou système de nettoyage, en particulier système d'inspection et/ou de nettoyage des égouts, comportant au moins un module d'appui selon l'une des revendications précédentes.

16. Système d'inspection et/ou système de nettoyage selon la revendication précédente, ledit système d'inspection et/ou système de nettoyage comportant un moyen de travail, en particulier un outil, le moyen de travail pouvant être disposé avec le dispositif d'appui au centre du tuyau, ou ledit système d'inspection et/ou système de nettoyage pouvant être serré par le dispositif d'appui dans un tuyau.
